(19) Europäisches Patentamt / European Patent Office / Office européen des brevets

(11) EP 3 022 254 B1

(12) # EUROPÄISCHE PATENTSCHRIFT

(45) Veröffentlichungstag und Bekanntmachung des Hinweises auf die Patenterteilung:
**26.02.2020 Patentblatt 2020/09**

(21) Anmeldenummer: **14739821.8**

(22) Anmeldetag: **16.07.2014**

(51) Int Cl.:
***C08J 3/12*** (2006.01) ***C08J 3/14*** (2006.01)
***C08G 65/46*** (2006.01) ***C08G 75/23*** (2006.01)

(86) Internationale Anmeldenummer:
**PCT/EP2014/065240**

(87) Internationale Veröffentlichungsnummer:
**WO 2015/007774 (22.01.2015 Gazette 2015/03)**

(54) **VEREINZELUNG EINER POLYARYLENETHERLÖSUNG**

SEPARATION OF A POLYARYLENE ETHER SOLUTION

SÉPARATION D'UNE SOLUTION D'ÉTHER DE POLYARYLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2013 EP 13176993**

(43) Veröffentlichungstag der Anmeldung:
**25.05.2016 Patentblatt 2016/21**

(73) Patentinhaber: **BASF SE**
**67056 Ludwigshafen am Rhein (DE)**

(72) Erfinder:
- **ERBES, Jörg**
  **76137 Karlsruhe (DE)**
- **MÜSSIG, Stefan**
  **67056 Ludwigshafen (DE)**
- **KORTEKAMP, Tobias**
  **68159 Mannheim (DE)**
- **KRÜGER, Marco**
  **68219 Mannheim (DE)**
- **STEFFEN, Markus**
  **67487 Maikammer (DE)**
- **ULZHÖFER, Angela**
  **67065 Ludwigshafen (DE)**
- **SCHNEIDER, Cecile**
  **67227 Frankenthal (DE)**
- **WIEDEMANN, Alexandra**
  **67273 Weisenheim am Berg (DE)**
- **GRAMLICH, Simon**
  **69493 Hirschberg (DE)**

(74) Vertreter: **BASF IP Association**
**BASF SE**
**G-FLP-C006**
**67056 Ludwigshafen (DE)**

(56) Entgegenhaltungen:
**EP-A1- 2 189 487** **EP-A1- 2 287 236**
**EP-A1- 2 305 740** **WO-A1-94/15999**
**DE-A1- 3 644 464** **US-A- 3 923 738**

- **KRICHELDORF ET AL: "Aromatic Polyethers", 1. Januar 2005 (2005-01-01), HANDBOOK OF POLYMER SYNTHESIS, MARCEL DEKKER, US, PAGE(S) 427 - 443, XP009154507, ISBN: 978-0-8247-5473-0 das ganze Dokument**
- **ANONIMOUS ED - MARK ET AL: "Polymer science and technology", 1. Januar 2003 (2003-01-01), ENCYCLOPEDIA OF POLYMER SCIENCE AND TECHNOLOGY,, PAGE(S) 2 - 8, XP009154506, ISBN: 0-471-27507-7 das ganze Dokument**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 022 254 B1

## Beschreibung

Die Erfindung betrifft ein Verfahren zur Herstellung von Polyarylenether-Perlen aus einer Polyarylenetherlösung umfassend die Schritte

i) Vereinzelung der Polyarylenetherlösung in einer Vereinzelungsvorrichtung, die in eine Schwingung mit einer Frequenz im Bereich von 10 bis 1400 Hz versetzt wird, unter Erhalt von Tropfen,
ii) Überführen der Tropfen in ein Fällbad unter Ausbildung von Polyarylenether-Perlen in dem Fällbad, wobei das Fällbad

(A) mindestens ein aprotisches Lösungsmittel (Komponente (1)) und mindestens ein protisches Lösungsmittel (Komponente (2)) enthält,
(B) eine Temperatur von 0°C bis $T_c$ aufweist, wobei die kritische Temperatur $T_c$ in [°C] sich mit der Zahlenwertgleichung $T_c$ = (77- c) / 0,58 bestimmen lässt, in der c die Konzentration der Komponente (1) im Fällbad in [Gew.-%] ist und
(C) die Komponente (1) in Konzentrationen von 12 bis 70 Gew.-% aufweist, wobei

die Gew.-% jeweils bezogen sind auf die Summe der Gew.-% der Komponente (1) und der Komponente (2) im Fällbad, und wobei das Fällbad als Komponente (2) Wasser und/ oder Alkohol enthält, wobei die Polyarylenetherlösung eine Konzentration von 5 bis 50 Gew.-% Polyarylenether im aprotischen Lösungsmittel aufweist, wobei die Gew.-% bezogen sind auf die Summe der Gew.-% des Polyarylenethers und des aprotischen Lösungsmittels, wobei die Polyarylenetherlösung bei der Vereinzelung eine Temperatur von 15 bis 250°C aufweist, wobei das aprotische Lösungsmittel ausgewählt ist aus der Gruppe bestehend aus N-Methylpyrrolidon, N-Ethylpyrrolidon, Dimethylsulfoxid, Dimethylformamid, Sulfolan, Diphenylsulfon, 1,2-Dichlorbenzol, Hexamethylphosphorsäuretriamid und deren Mischungen.

Auch betrifft die vorliegende Erfindung die Polyarylenether-Perlen aus dem Verfahren und deren Verwendung zur Herstellung von Polyarylenetherprodukten.

Bei der Herstellung von Polymeren fallen die Polymere häufig in Form von Polymerlösungen an. Diese Polymerlösungen können dabei direkt bei der Herstellung der Polymeren entstehen, beispielsweise bei der Polykondensation von Monomeren in einem Lösungsmittel (Lösungspolymerisation). Auch bei der Polykondensation von Monomeren in Abwesenheit eines Lösungsmittels (Massepolymerisation) werden die erhaltenen Polymere häufig zur weiteren Aufarbeitung in einem Lösungsmittel gelöst.

Zur Überführung der in der Polymerlösung enthaltenen Polymere in den reinen, festen Zustand sind im Stand der Technik verschiedene Verfahren beschrieben worden. Ein gängiges Verfahren ist hierbei das Einbringen der Polymerlösung in ein weiteres Lösungsmittel, in dem das Polymer nicht löslich ist. Das weitere Lösungsmittel, in dem das Polymer nicht löslich ist, wird im Allgemeinen auch als Fällbad bezeichnet.

Zur Herstellung von Polymer-Perlen sind im Stand der Technik darüber hinaus Verfahren beschrieben, bei denen die Polymerlösung zu Tropfen vereinzelt wird aus denen im Fällbad nachfolgend die Polymer-Perlen erhalten werden. Bei den im Stand der Technik beschriebenen Verfahren muss dabei das Fällbad hauptsächlich aus dem weiteren Lösungsmittel, in dem das Polymer nicht löslich ist, bestehen. Der Anteil des Lösungsmittels, in dem das Polymer löslich ist, im Fällbad wird dabei möglichst niedrig gehalten. Dies ist notwendig, um die Ausfällung sicher zu gewährleisten. Um den Anteil des Lösungsmittels, in dem das Polymer löslich ist, im Fällbad möglichst niedrig zu halten, werden im Allgemeinen entweder geringe Volumina der Polymerlösung in große Volumina des Fällbad eingetropft oder das Fällbad wird kontinuierlich ausgetauscht und durch frisches ersetzt.

Verfahren zur Herstellung von Polymer-Perlen sind beispielsweise in der DE 3 644 464 und der EP 2 305740 beschrieben. Die DE 3 644 464 beschreibt ein Verfahren zur Herstellung von Polyarylethersulfon-Perlen, bei dem eine Lösung, die ein Polyarylethersulfon und N-Methylpyrrolidon enthält, in ein Fällbad eingetropft wird, das aus Wasser besteht. Auch die EP 2 305740 beschreibt ein Verfahren zur Herstellung von Polymer-Perlen, bei dem reines Wasser als Fällbad eingesetzt wird. Das als Fällbad eingesetzte Wasser wird dabei ständig ausgetauscht, um die Konzentration an N-Methylpyrrolidon möglichst niedrig zu halten und die gebildeten Polymer-Perlen zu nachgelagerten Prozessstufen weiter zu transportieren.

In den Dokumenten EP 2 0189 487, EP 2 0287 236, WO 94/15999 und US 3,923,738 werden Verfahren zur Herstellung von partikulären Polyarylenethern bzw. Polyarylenethersulfonen beschrieben. Die Partikelgrößen der nach diesen Verfahren erhaltenen Partikel liegt unter 1000μm.

Bei den im Stand der Technik beschriebenen Verfahren zur Herstellung von Polymer-Perlen bestand noch Raum für Verbesserungen. Die nach den im Stand der Technik beschriebenen Verfahren erhältlichen Polymer-Perlen neigen zur Agglomeration. Darüber hinaus sind die Sphärizitäts-Werte nicht immer zufriedenstellend. Bei den im Stand

der Technik beschriebenen Verfahren entsteht zudem in größeren Mengen sogenannter Feinanteil. Hierbei handelt es sich um Polymer-Perlen, deren Teilchengröße sehr gering ist und die bei der weiteren Aufarbeitung bzw. Verarbeitung der Polymer-Perlen zu Problemen führen.

Die Aufgabe der vorliegenden Erfindung bestand darin, ein Verfahren zu entwickeln, bei dem Polyarylenetherperlen zur Verfügung gestellt werden, die im Fällbad nicht agglomerieren und somit ohne weitere Aufarbeitungsschritte weiterverarbeitet werden können.

Herkömmliche Vereinzelungsverfahren und Fällbäder erzeugen Partikel, die eine relativ breite Partikelgrößenverteilung aufweisen. So stellte sich die Aufgabe ein Verfahren zur Verfügung zu stellen, bei dem geringe Mengen an Feinanteil auftreten, da Feinanteile Siebe verstopfen können. Auch sollte kein zu hoher Grobanteil auftreten, da zu große Polyarylenetherperlen nur erschwert extrahiert werden können. Darüber hinaus sollte das Verfahren zuverlässig laufen.

Die erfindungsgemäße Aufgabe wird durch das eingangs beschriebene Verfahren gelöst.

Es wurde überraschend festgestellt, dass es zur Herstellung von Polyarylenether-Perlen vorteilhaft ist, Fällbäder einzusetzen, die größere Mengen mindestens eines aprotischen Lösungsmittels enthalten. Entgegen dem im Stand der Technik beschriebenen Vorurteil, dass das eingesetzte Fällbad möglichst wenig Lösungsmittel enthalten soll, in dem das Polymer gut löslich ist, wurde gefunden, dass durch Konzentrationen von mindestens 12 Gew.-%, mindestens eines aprotischen Lösungsmittels (Komponente 1) im Fällbad die Bildung des unerwünschten Feinanteils verhindert oder zumindest vermindert werden kann.

Es wird vermutet, dass die Anwesenheit eines aprotischen Lösungsmittels die Oberflächenspannung des Fällbads herabsetzt, wodurch die Bildung von Feinanteil verringert wird.

Unter "Feinanteil" werden im Rahmen der vorliegenden Erfindung Polyarylenether-Perlen verstanden, die eine Partikelgröße von $\leq$ 1000 $\mu$m (kleiner/gleich 1000 $\mu$m) aufweisen. Die Bestimmung der Partikelgröße erfolgt mittels Siebanalyse. Vermessen werden die bei 60 °C getrockneten Polyarylenether-Perlen.

Die Konzentration der Komponente (1) im Fällbad beträgt bereits zu Beginn des Verfahrens mindestens 12 Gew.-%. Diese Ausführungsform ist bevorzugt.

Die Untergrenze der Konzentration der Komponente (1) im Fällbad beträgt somit mindestens 5 Gew.-%, bevorzugt mindestens 8 Gew.-%. und besonders bevorzugt mindestens 12 Gew.-%. Die Gew.-% sind dabei jeweils bezogen auf die Summe der Gew.-% der Komponente (1) und der Komponente (2) im Fällbad.

Die Obergrenze der Konzentration der Komponente (1) im Fällbad ist temperaturabhängig. Sie wird auch als kritische Konzentration $c_c$ bezeichnet. Die Einheit von $c_c$ ist [Gew.-%].

Die kritische Konzentration $c_c$ in [Gew.-%] lässt sich durch die Zahlenwertgleichung

$$c_c = 77 - 0{,}58 * T$$

bestimmen.

Darin ist T die Temperatur des Fällbads in [°C]. T gibt damit die tatsächliche Temperatur des Fällbads an. Ausgehend von der tatsächlichen Temperatur des Fällbads lässt sich die kritische Konzentration $c_c$ in Gew.-% errechnen. Die Gew.-% sind dabei auf die Summe der Komponenten (1) und (2) im Fällbad bezogen.

Innerhalb des erfindungsgemäßen Konzentrationsbereichs von 5 Gew.-% bis $c_c$ wird die Bildung von Feinanteil sowie die Agglomeration der Polyarylenether-Perlen weitestgehend verhindert.

Polyarylenether sind dem Fachmann als Polymerklasse bekannt. Im Prinzip kommen alle dem Fachmann bekannten und/oder nach bekannten Methoden herstellbaren Polyarylenether in Betracht. Entsprechende Methoden werden weiter unten erläutert. Bevorzugte Polyarylenether sind aus Bausteinen der allgemeinen Formel I aufgebaut:

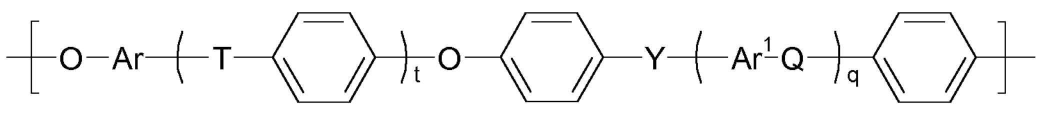

(I),

wobei die Symbole t, q, Q, T, Y, Ar und $Ar^1$ folgende Bedeutungen aufweisen:

- t, q: unabhängig voneinander 0, 1, 2 oder 3,
- Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, und wobei wenigstens eines aus Q, T und Y für $-SO_2-$ steht und
- Ar, $Ar^1$: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und $-SO_2-$, mit der Maßgabe, dass wenigstens eines aus der Gruppe bestehend aus Q, T und Y für $-SO_2-$ steht.

Sofern Q, T oder Y $-CR^aR^b-$ sind, stehen $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe.

Bevorzugte $C_1$-$C_{12}$-Alkylgruppen umfassen lineare und verzweigte, gesättigte Alkylgruppen mit von 1 bis 12 Kohlenstoffatomen. Insbesondere sind folgende Reste zu nennen: $C_1$-$C_6$-Alkylrest, wie Methyl, Ethyl, n-Propyl, i-Propyl, n-Butyl, sek-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren $C_1$-$C_{12}$-Alkoxygruppen kommen die weiter oben definierten Alkylgruppen mit von 1 bis 12 Kohlenstoffatomen in Betracht. Vorzugsweise verwendbare Cycloalkylreste umfassen insbesondere $C_3$-$C_{12}$-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und $Ar^1$ bedeuten unabhängig voneinander eine $C_6$-$C_{18}$-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist $Ar^1$ eine unsubstituierte $C_6$- oder $C_{12}$-Arylengruppe.

Als $C_6$-$C_{18}$-Arylengruppen Ar und $Ar^1$ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und $Ar^1$ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenether sind solche, die mindestens eine der folgenden Bausteine Ia bis Io als wiederkehrende Struktureinheiten enthalten:

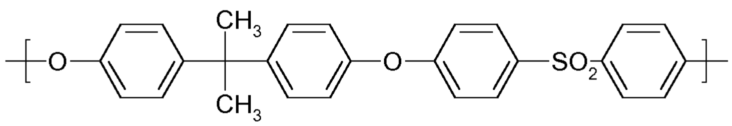
Ia

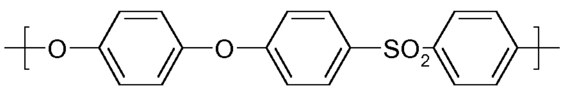
Ib

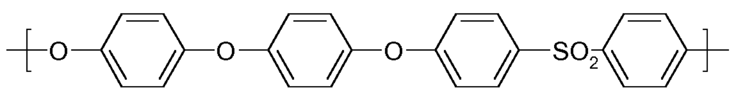
Ic

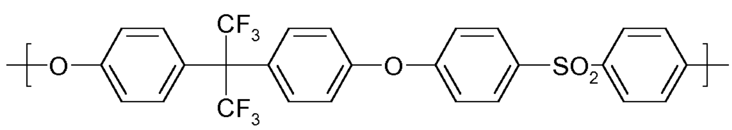
Id

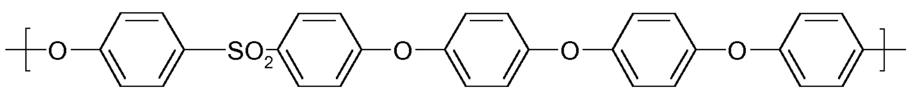
Ie

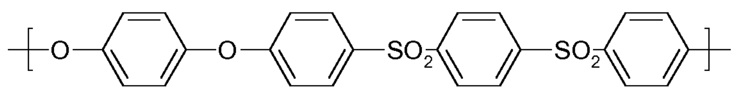
If

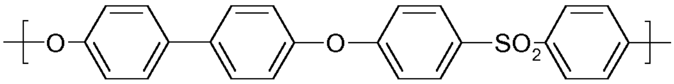

Ig

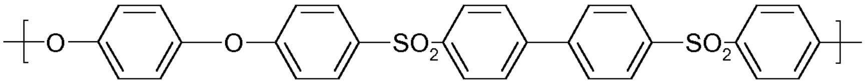

Ih

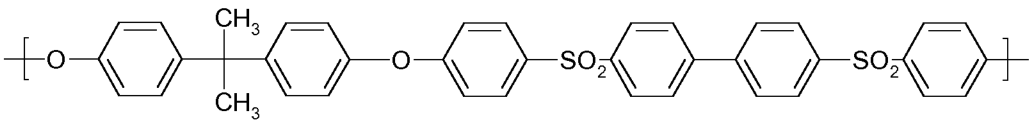

Ii

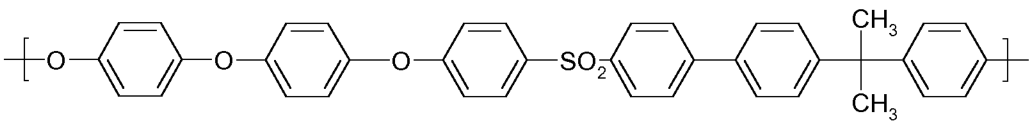

Ij

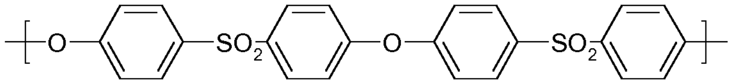

Ik

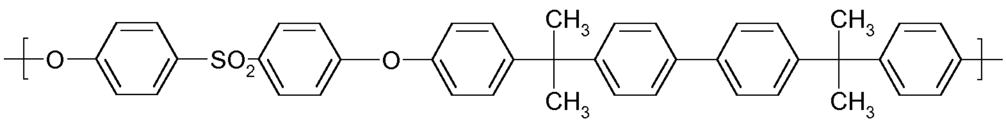

I l

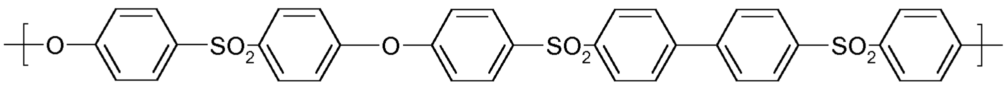

Im

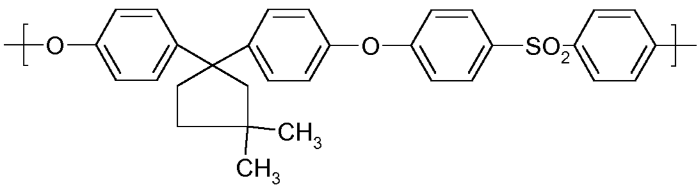

In

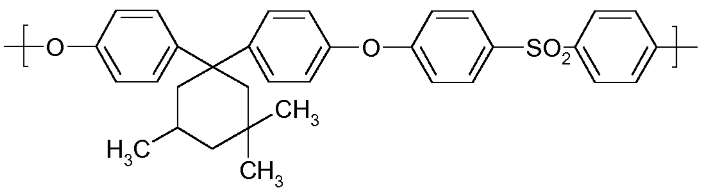

Io

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine Ia, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = $SO_2$. Aus der vorgenannten Wiederholungseinheit aufgebaute besonders bevorzugte Polyarylenethersulfone (A) werden als Polyphenylensulfon (PPSU) bezeichnet (Formel Ig).

In einer weiteren besonders bevorzugten Ausführungsform ist Ar = 1,4-Phenylen, t = 1, q = 0, T = $C(CH_3)_2$ und Y = $SO_2$. Aus der vorgenannten Wiederholungseinheit aufgebaute besonders bevorzugte Polyarylenethersulfone (A) werden als Polysulfon (PSU) bezeichnet (Formel Ia).

In einer weiteren besonders bevorzugten Ausführungsform ist Ar = 1,4-Phenylen, t = 1, q = 0, T = Y = $SO_2$. Aus der vorgenannten Wiederholungseinheit aufgebaute besonders bevorzugte Polyarylenethersulfone werden als Polyethersulfon (PESU) bezeichnet (Formel Ik).

Abkürzungen wie PPSU, PESU und PSU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Polyarylenether weisen vorzugsweise gewichtsmittlere Molekulargewichte $M_w$ von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Darüber hinaus weisen die Polyarylenether vorzugsweise eine scheinbare Schmelzviskosität bei 350 °C/1150 $s^{-1}$ von 150 bis 300 Pa s, bevorzugt von 150 bis 275 Pa s auf.

Die Fließfähigkeit wurde anhand der Schmelzeviskosität beurteilt. Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Kapillare von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise $C_1$-$C_6$-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente sind Halogen, insbesondere Chlor, Alkoxy, insbesondere Methoxy, Aryloxy, insbesondere Phenoxy, oder Benzyloxy.

Unter einer Polyarylenetherlösung wird eine Lösung verstanden, die ein oder mehrere Lösungsmittel, einen oder mehrere Polyarylenether umfassen kann. Die Polyarylenetherlösung kann darüber hinaus Materialien enthalten, die aus dem Herstellungsprozess stammen. Hierzu zählen Verunreinigungen als auch Einsatzstoffe. Insbesondere kann die Polyarylenetherlösung auch Monomere sowie Salze aus dem Herstellungsprozess der Polyarylenether wie Natriumcarbonat, Kaliumcarbonat, Kaliumchlorid oder Natriumchlorid umfassen. Auch Nebenprodukte und/oder Zersetzungsprodukte können in der Polyarylenetherlösung vorhanden sein.

Als Lösungsmittel für die Polyarylenetherlösung können ein oder mehrere aprotische Lösungsmittel verwendet werden. Unter einem aprotischen Lösungsmittel ist ein Lösungsmittel zu verstehen, das nicht über eine funktionelle Gruppe verfügt, aus der ein oder mehrere Wasserstoffatome im Lösungsmittelmolekül als Proton abgespalten werden kann. Insbesondere können N-Methyl-2-pyrrolidon (NMP), N-Ethyl-2-pyrrolidon (NEP), Dimethylsulfoxid, Dimethylformamid, Sulfolan, 1,2-Dichlorbenzol, Hexamethylphosphorsäuretriamid und/oder Diphenylsulfon oder deren Mischungen verwendet werden.

Als aprotisches Lösungsmittel ist bevorzugt mindestens ein Lösungsmittel ausgewählt aus der Gruppe bestehend aus N-Methyl-2-pyrrolidon (NMP), N-Ethyl-2-pyrrolidon (NEP), Dimethylsulfoxid, Dimethylformamid, Sulfolan und/oder Diphenylsulfon.

Als aprotische Lösungsmittel besonders bevorzugt sind N-Methyl-2-pyrrolidon (NMP), N-Ethyl-2-pyrrolidon (NEP), Dimethylsulfoxid, Sulfolan und/oder Mischungen dieser Lösungsmittel.

In einer Ausführungsform der vorliegenden Erfindung enthält die Polyarylenetherlösung das gleiche aprotische Lösungsmittel wie das Fällbad. Gegenstand der vorliegenden Erfindung ist somit auch ein Verfahren, bei dem die Polyarylenetherlösung und das Fällbad das gleiche aprotische Lösungsmittel enthalten.

Die Polyarylenetherlösung hat bevorzugt eine Konzentration von 5 bis 50 Gew.-% Polyarylenether in aprotischem Lösungsmittel, wobei die Gew.-% bezogen sind auf die Summe der Gew.-% des Polyarylenethers und des aprotischen Lösungsmittels. Insbesondere kann die Polyarylenetherlösung eine Konzentration von 5 bis 40 Gew.-%, bevorzugt von 5 bis 35 Gew.-%, besonders bevorzugt von 5 bis 34 Gew.-%, zum Beispiel von 6 bis 30 Gew.-% Polyarylenether in aprotischem Lösungsmittel aufweisen, wobei die Gew.-% bezogen sind auf die Summe der Gew.-% des Polyarylenethers und des aprotischen Lösungsmittels.

Die Polyarylenetherlösung kann eine Viskosität von 0,05 bis 1,30 Pa s aufweisen, wobei die Viskosität in einem schubspannungskontrollierten Rotationsviskosimeter zum Beispiel mit einer Couette Geometrie (DIN 53019-1), bei der Temperatur, bei der die Vereinzelung durchgeführt wird, und bei einem Scherrate von $10^{-1}$ $s^{-1}$ gemessen wird.

Die Polyarylenetherlösung hat erfindungsgemäß bei dem Vereinzelungsschritt eine Temperatur von 15 bis 250 °C insbesondere von 20 bis 120 °C aufweisen, zum Beispiel von 20 bis 110 °C aufweisen, wobei die Temperatur mit Hilfe eines Thermometers, zum Beispiel mit einem Widerstandsthermometer PT100 an der Vereinzelungsvorrichtung gemessen werden kann, aus dem die Polyarylenetherlösung der Vereinzelungsvorrichtung zur Durchführung der Vereinzelung zugeführt wird.

Bei dem Verfahren zur Herstellung von Polyarylenether-Perlen aus einer Polyarylenetherlösung durchläuft eine Polyarylenetherlösung einen Vereinzelungsschritt zur Bildung von Tropfen. Dabei ist es möglich, unterschiedliche Arten von Vereinzelungsvorrichtungen einzusetzen. Die Polymerlösung kann beispielsweise versprüht oder vertropft werden.

Wird die Polymerlösung versprüht, können als Vereinzelungsvorrichtung Einstoff-, Zweistoff- oder Mehrstoffdüsen verwendet werden. Zweistoff- oder Mehrstoffdüsen können insbesondere dann angewendet werden, wenn die Polyarylenetherlösung schon vor dem auftreffen auf die Fälllösung im Fällbad mit der Fälllösung in Kontakt gebracht werden soll.

Insbesondere können Sprühdüsen gewählt werden, die möglichst große Perlen erzielen. Zur Erzielung größerer Perlen können Federkegeldüsen verwendet werden, also Druckdüsen, die durch eine Feder betätigt werden. Zur Erzielung möglichst kleiner Perlen können Hohlkegeldüsen verwendet werden.

Wird die Polyarylenetherlösung vereinzelt, bietet es sich an als Vereinzelungsvorrichtungen, eine oder mehrere Lochplatten zu verwenden. Unter einer Lochplatte wird eine Platte aus Metall, Glas oder Kunststoff verstanden, die Löcher aufweist, durch die die Polyarylenetherlösung vereinzelt wird.

Der Durchmesser eines Loches der Lochplatte kann von 0,1 bis 5,0 mm betragen. Insbesondere kann der Durchmesser der eines Loches der Lochplatte von 0,5 bis 4,0 mm betragen. Bevorzugt beträgt der Durchmesser eines Loches der Lochplatte von 0,5 bis 2,5 mm, insbesondere von 0,5 bis 2,0 mm.

Auch können als Vereinzelungsvorrichtung eine oder mehrere Kapillaren zur Vertropfung der Polyarylenetherlösung eingesetzt werden. Unter einer Kapillare wird ein langgestreckter Hohlraum verstanden, der von einer Begrenzung umgeben ist, die aus Metall, Glas und/oder Kunststoff sein kann.

Der Innendurchmesser einer Kapillare kann von 0,1 bis 5,0 mm betragen. Insbesondere kann der Innendurchmesser der Kapillare von 0,5 bis 4,0 mm betragen. Bevorzugt kann der Durchmesser der Kapillare 0,5 bis 2,5 mm, insbesondere von 0,5 bis 2,0 mm betragen.

Bei der Vereinzelung der Polyarylenetherlösung zu Tropfen wird die Vereinzelungsvorrichtung in eine Schwingung bei einer Frequenz von 10 bis 1400 Hz, bevorzugt von 50 bis 1000 Hz, insbesondere von 1000 bis 800 Hz versetzt. Die Vereinzelungsvorrichtung kann longitudinal oder transversal in eine Schwingung versetzt werden. Zur Erzeugung longitudinaler Schwingungen kann die Vereinzelungsvorrichtung zum Beispiel an einer Membran befestigt werden, die über einen Schwinger mit Hilfe eines Tongenerators in longitudinale Schwingungen versetzt wird. Anstelle des Tongenerators kann auch ein piezoelektrischer Wandler eingesetzt werden. Auch können Oszillatoren oder Rüttler eingesetzt werden um eine longitudinale oder transversale Schwingung der Vereinzelungsvorrichtung zu erreichen.

Transversale Schwingungen werden im Allgemeinen mit Vibratoren erzeugt.

Bei der Vereinzelung der Polyarylenetherlösung zu Tropfen bei der die Vereinzelungsvorrichtung in eine Schwingung versetzt wird, kann eine Amplitude der Schwingung von -300 bis +300 dBV eingestellt werden.

In einer Ausführungsform bezüglich des Vereinzelungsverfahrens wird die Polyarylenetherlösung bei Überdruck vereinzelt. In einer Variante wird die Polyarylenetherlösung bei einem Überdruck von 0,1 bis 50 bar, insbesondere von 1 bis 40 bar, bevorzugt von 1 bis 10 bar, besonders bevorzugt von 1 bis 9 bar vereinzelt. Der Druck wird zwischen der Vereinzelungsvorrichtung und dem Vorratsbehälter, der die zu vereinzelnde Polyarylenetherlösung umfasst, mit Hilfe eines Überdruckmessgeräts (zum Beispiel kann ein Rohrfeder-Überdruckmessgerät geeignet sein) gemessen.

Das Fällbad enthält ein oder mehrere aprotische Lösungsmittel als Komponente (1), wobei erfindungsgemäß N-Methyl-2-pyrrolidon (NMP), N-Ethyl-2-pyrrolidon (NEP), Dimethylsulfoxid, Dimethylformamid, Sulfolan und/oder Diphenylsulfon oder deren Mischungen verwendet werden können.

Das Fällbad enthält außerdem ein oder mehrere protische Lösungsmittel als Komponente (2).

Das Fällbad enthält erfindungsgemäß Wasser und/oder mindestens einen Alkohol als Komponente 2. Als Wasser kann mineralisiertes oder demineralisiertes Wasser verwendet werden. Als Alkohol können ein- und/oder zweiwertige Alkohole verwendet werden. Bevorzugt werden einwertige Alkohole verwendet. Als einwertige Alkohole können insbesondere Methanol, Ethanol, 1-Propanol und/oder 2-Propanol verwendet werden.

In einer bevorzugten Ausführungsform enthält das Fällbad 12 bis 50 Gew.-%der Komponente (1), wobei die Gew.-% jeweils bezogen sind auf die Summe der Gew.-% der Komponente (1) und der Komponente (2) im Fällbad.

In einer weiteren besonders bevorzugten Ausführungsform enthält das Fällbad12 bis 70 Gew.-% der Komponente (1), wobei die Gew.-% jeweils bezogen sind auf die Summe der Gew.-% der Komponente (1) und der Komponente (2) im Fällbad.

Als Untergrenze weist das Fällbad im Allgemeinen eine Temperatur von mindestens 0 °C, bevorzugt von mindestens 5 °C auf. Die Obergrenze der Temperatur des Fällbads ist abhängig von der Konzentration c der Komponente (1) im Fällbad. Die Obergrenze der Temperatur wird auch als kritische Temperatur $T_c$ bezeichnet. Die Einheit von $T_c$ ist [°C].

Die kritische Temperatur $T_c$ in [°C] lässt sich durch die Zahlenwertgleichung

$$T_c = (77-c) / 0,58$$

bestimmen.

Darin ist c die Konzentration der Komponente (1) im Fällbads in [Gew.-%]. c gibt damit die tatsächliche Konzentration der Komponente (1) im Fällbad an. Ausgehend von der tatsächlichen Konzentration der Komponente (1) im Fällbad lässt sich die kritische Temperatur $T_c$ in [°C] errechnen Die Gew.-% sind dabei auf die Summe der Komponenten (1) und (2) im Fällbad bezogen.

Innerhalb des erfindungsgemäßen Temperaturbereichs von 0 °C bis $T_c$, bevorzugt von 5°C bis $T_c$, wird die Bildung von Feinanteil sowie die Agglomeration der Polyarylenether-Perlen weitestgehend verhindert.

In einer Ausführungsform der Erfindung ist das Fällbad bewegt. Insbesondere kann das Fällbad gerührt werden. Auch kann der Vereinzelungsschritt in ein strömendes Fällbad durchgeführt werden.

In einer Ausführungsform findet der Vereinzelungssschritt in einem geschlossenen Fällbad statt, wobei die Applikation zur Vereinzelung oberhalb der Fälllösung in oder an dem geschlossenen Behälter angebracht ist.

In einem Verfahren zur Herstellung von Polyarylenether-Perlen kann die Polyarylenetherlösung eine Fallstrecke von der Austrittsstelle bis Fällbadoberfläche von 0,10 m bis 1,20 m zurücklegen. Zum Beispiel kann die Polyarylenetherlösung eine Fallstrecke von der Austrittsstelle bis Fällbadoberfläche von 0,15 m bis 1,00 m zurücklegen.

Gegenstand der vorliegenden Erfindung ist ein Verfahren zur Herstellung von Polyarylenether-Perlen aus einer Polyarylenetherlösung, die ein aprotisches Lösungsmittel enthält und eine Konzentration von 5 bis 50 Gew.-% Polyarylenether in aprotischem Lösungsmittel aufweist, wobei die Gew.-% bezogen sind auf die Summe der Gew.-% des Polyarylenethers und des aprotischen Lösungsmittels, umfassend die Schritte

> i) Vereinzelung der Polyarylenetherlösung in einer Vereinzelungsvorrichtung, die in eine Schwingung mit einer Frequenz im Bereich von 10 bis 1400 Hz versetzt wird, unter Erhalt von Tropfen, wobei die Polyarylenetherlösung bei der Vereinzelung eine Temperatur von 15 bis 250°C aufweist,
> ii) Überführen der Tropfen in ein Fällbad unter Ausbildung von Polyarylenether-Perlen in dem Fällbad, wobei das Fällbad
>
> > (A) mindestens ein aprotisches Lösungsmittel (Komponente (1)) und mindestens ein protisches Lösungsmittel (Komponente (2)) enthält,
> > (B) eine Temperatur von 0°C bis $T_c$ aufweist, wobei die kritische Temperatur $T_c$ in [°C] sich mit der Zahlenwertgleichung $T_c$ = (77- c) / 0,58 bestimmen lässt, in der c die Konzentration der Komponente (1) im Fällbad in [Gew.-%] ist und
> > (C) die Komponente (1) in Konzentrationen von 12 bis 70 Gew.-% aufweist, wobei

die Gew.-% jeweils bezogen sind auf die Summe der Gew.-% der Komponente (1) und der Komponente (2) im Fällbad, und wobei das Fällbad als Komponente (2) Wasser und/oder Alkohol enthält und das aprotische Lösungsmittel ausgewählt ist aus der Gruppe bestehend aus N-Methylporrolidon, N-Ethylpyrrolidon, Dimethylsulfoxid, Dimethylformamid, Sulfolan, Diphenylsulfon, 1,2-Dichlorbenzol, Hexamethylphosphorsäuretriamid und deren Mischungen.

Des Weiteren bezieht sich die Erfindung auf Perlen aus dem Verfahren zur Herstellung von Polyarylenether-Perlen. Die Perlen liegen nach dem Vereinzelungsschritt in der Fällbad Lösung vor. Die Perlen können von den weiteren Bestandteilen, die im Fällbad vorhanden sind durch geeignete Mittel abgetrennt werden. Beispielsweise können die Perlen durch Sieben abgetrennt werden.

In der Regel haben die Perlen eine Verweilzeit in der Fälllösung von 1 min bis 2 Tage.

Die Anmeldung betrifft auch die Verwendung der Perlen zur Herstellung von Polyarylenetherprodukten. Unter Polyarylenetherprodukten werden Produkte verstanden, die einer Extraktion, Trocknung und/oder einem formgebenden Verfahren unterzogen wurden. So betrifft die Anmeldung auch Produkte aus dem Verfahren, die nach Aufarbeitung wie Extraktion und Trocknung in eine verkaufsfähige Form gebracht werden wie Pellets, Pulver, Granulate, Chips, Körner oder Fäden.

Beispiele

Die Versuche 1 bis 25 wurden mit verschiedenen exemplarischen Polyarylenetherlösungen durchgeführt, die alle in der Tabelle 1 beschrieben sind.
Die eingesetzten Lösungen wurden auf die jeweiligen Konzentrationen eingestellt.

Tabelle 1: Beschreibung der Polyaryletherlösungen.

| Lösungsnummer | Lösungsmittel | Struktur des Polyarylethers | Konzentration im Lösungsmittel [Gew.%] |
|---|---|---|---|
| 1 | NMP | Formel I | 21 |
| 2 | NMP | Formel I | 17 |
| 3 | NMP | Formel II | 16 |
| 4 | NMP | Formel II | 18 |

Die Viskositätszahlbestimmung wurde nach ISO1628 aus einer 0,01g/ml Lösung in Phenol/1,2-Dichlorbenzol (1:1) bei 25°C durchgeführt.

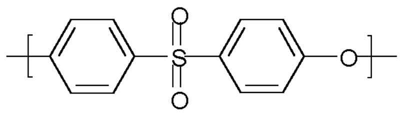

Formel (I)

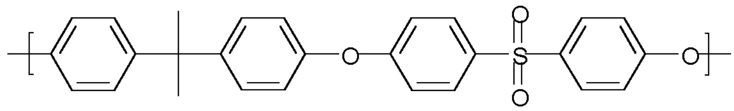

Formel (II)

Die Polyaryletherlösung, deren Konzentration eingestellt wurde, wurde aus einem Vorlagebehälter unter einer konstanten Förderrate durch eine Kapillare zur Vereinzelung unter Bildung von Tropfen gefahren. Die Versuche wurden mit einer Kapillare als Vereinzelungsvorrichtung durchgeführt, wobei die Kapillare durch den Einsatz eines Vibrators zum Schwingen gebracht werden konnte. Der Kapillardurchmesser, die Fallstrecke von Austritt aus der Kapillare zur Fällbad Oberfläche und die Schwingungsparameter wurden, wie in nachstehenden Tabellen angegeben, variiert.

Nach der Vereinzelung fiel der Tropfen der jeweiligen Polymerlösung in ein Fällbad. Die Temperatur und Zusammensetzung des Fällbades wurden während eines Versuchs konstant gehalten.

Die bei dem Vorgang entstehenden Perlen wurden mit Hilfe eines Siebs abgetrennt. Zur Untersuchung des Produktes wurde das ausgefällte Polymer mit Wasser, das eine Temperatur von 95°C hatte, für 20 Stunden extrahiert. Zu diesem Zweck wurden die Perlen in ein Fass gegeben, das mit 160 l Wasser pro Stunde durchflossen wurde. Anschließend wurden die Perlen unter Vakuum bei 150 °C zwei Tage lang getrocknet.

Verschiedenen Analysen wurden durchgeführt.
Eine Siebanalyse wurde mit den extrahierten und getrockneten Polyarylethersulfon-Perlen durchgeführt. Die Menge des Produkts betrug jeweils 40 bis 75 g. Die Perlen wurden gewogen und anschließend in eine Rüttelmaschine eingefüllt. Die Rüttelmaschine bestand aus mehreren Sieben, wobei jeweils das gröbere Sieb höher angeordnet war. Die Maschenweiten der Siebe waren: 3,15 mm, 2,5 mm, 2 mm, 1,6 mm, 1,25 mm, 1,0 mm, 0,63 mm, 0,5 mm, 0,4 mm, 0,2 mm. Die Rüttelmaschine lief 15 Minuten. Anschließend wurden die Rückstände auf den einzelnen Sieben gewogen und die Gewichte summiert und dadurch eine Partikelgrößenverteilung bestimmt. Nach 7Stunden Extraktion wurde eine Probe aus dem Extraktionsfass gezogen und der NMP-Gehalt in den Partikeln wurde anhand von Gaschromatographie (GC) Analyse bestimmt.

Beispiele 1 bis 9: Einfluss der Schwingung

Bei den Beispielen 1 bis 7 wurde die Lösung 1 eingesetzt. Die Temperatur der Polyarylether Lösung an der Vereinzelungsvorrichtung betrug 70 °C. Das Fällbad bestand aus einer Wasser / NMP Mischung (80 Gew.-% Wasser / 20 Gew.-% NMP). Die Temperatur des Fällbads wurde bei 35 °C konstant gehalten. Die Fallhöhe wurde ebenso konstant bei 80 cm gehalten.

| Bsp. | Vibration der Kapillare | | | Kapillaren-durchmesser | Durchsatz | Partikelgröße: Feinanteil (Partikel <1mm) | Partikelgröße: Grobanteil (Partikel >2mm) | NMP Gehalt in Partikeln nach 7- stufiger Extraktion |
|---|---|---|---|---|---|---|---|---|
| | Einsatz | Frequenz [Hz] | Amplitude [dbV] | [mm] | [g/h] | Gew.% | Gew.% | Gew.% |
| 1 | Nein | - | - | 1 | 1980 | 3,2 | 7,6 | 0,55 |
| 2 | Ja | 150 | 50 | 1 | 1974 | 1,9 | 0,7 | 0,35 |
| 3 | Nein | - | - | 1 | 900 | 0,5 | 3 | n.b. |
| 4 | Nein | - | - | 1 | 1400 | 0,6 | 58,6 | n.b. |
| 5 | Ja | 150 | 50 | 1 | 1068 | 2,1 | 0,5 | n.b. |

(n.b.: nicht bestimmt)

Die Beispiele 1 und 2 zeigen eine Verbesserung der Extrahierbarkeit der Perlen durch den Einsatz einer schwingenden Vereinzelungsvorrichtung (der NMP Gehalt wurde um 36% in den Polyaryletherpartikeln reduziert).

| Bsp. | Vibration der Kapillare | | | Kapillaren-durchmesser | Durchsatz | Partikelgröße: Feinanteil (Partikel <0,63mm) | Partikelgröße: Grobanteil (Partikel >1,6mm) | NMP Gehalt in Partikeln nach 7- stufiger Extraktion |
|---|---|---|---|---|---|---|---|---|
| | Einsatz | Frequenz [Hz] | Amplitude [dbV] | [mm] | [g/h] | Gew.% | Gew.% | Gew.% |
| 6 | Nein | - | - | 0,7 | 1800 | 0,2 | 89 | 0,58 |
| 7 | Ja | 187 | 50 | 0,7 | 2020 | 4,3 | 0,3 | 0,25 |

Die Beispiele 6 und 7 zeigen eine Verbesserung der Extrahierbarkeit der Perlen durch den Einsatz einer schwingenden Vereinzelungsvorrichtung (der NMP Gehalt wurde um 57% in den Polyaryletherpartikeln reduziert).

Bei den Beispielen 8 bis 10 wurde die Lösung 2 eingesetzt. Die Temperatur der Polyaryletherlösung an der Kapillare betrug 70°C. Das Fällbad bestand aus einer Wasser / NMP Mischung (80Gew% Wasser / 20Gew% NMP). Die Temperatur des Fällbads wurde bei 35°C konstant gehalten. Die Fällhöhe wurde ebenso konstant bei 80cm gehalten.

| Bsp. | Vibration der Kapillare | | | Kapillaren-durchmesser | Durchsatz | Partikelgröße: Feinanteil (Partikel <0,63mm) | Partikelgröße: Grobanteil (Partikel >1,6mm) | NMP Gehalt in Partikeln nach 7- stufiger Extraktion |
|---|---|---|---|---|---|---|---|---|
| | Einsatz | Frequenz [Hz] | Amplitude [dbV] | [mm] | [g/h] | Gew.% | Gew.% | Gew.% |
| 8 | Nein | - | - | 0,7 | 1400 | 0,4 | 57 | 0,0085 |
| 9 | Ja | 215 | 100 | 0,7 | 1488 | 0 | 19 | 0,0045 |

Bei den Beispielen 8 und 9 konnte eine Verbesserung der Extrahierbarkeit der Perlen durch die Erzeugung einer engeren Partikelgrößenverteilung (der NMP Gehalt wurde um 47% in den Polyaryletherpartikeln reduziert) erreicht werden.

Beispiele 10 bis 25: Einfluss der Fällbadzusammensetzung

Bei den Beispielen 10 bis 17 wurde die Lösung 3 eingesetzt. Die Temperatur der Polyaryletherlösung an der Kapillare betrug 70°C. Der Kapillarendurchmesser betrug 0,7mm. Die Fällhöhe wurde konstant bei 80cm gehalten. Der Durchsatz wurde ebenso bei 2064g/h konstant gehalten.
Versuche wurden bei unterschiedlichen Temperaturen und Zusammensetzung durchgeführt, wie in den Tabellen angegebenen.
Der NMP-Gehalt im Fällbad wurde von 20 Gew.-% erhöht bis die im Fällbad vorliegenden Perlen agglomerierten. Agglomeration der Perlen ist unvorteilhaft, da solche Perlen nicht weiter verarbeitet werden können.
Variation des NMP-Gehaltes des Fällbades bei 35°C Fällbad Temperatur:

| Bsp. | Vibration der Kapillare | | | Fällbad | | Ausfallverhalten |
|---|---|---|---|---|---|---|
| | Einsatz | Frequenz [Hz] | Amplitude [dbV] | T [°C] | NMP Gehalt [Gew.%] | |
| 10 | Ja | 161 | 100 | 35 | 20 | Einzelne Perlen |
| 11 | Ja | 161 | 100 | 35 | 40 | Einzelne Perlen |
| 12 | Ja | 161 | 100 | 35 | 50 | Einzelne Perlen |
| 13 | Ja | 161 | 100 | 35 | 58 | Perlen, die im Fällbad agglomerieren |

Variation des NMP-Gehaltes des Fällbades bei 50°C Fällbad Temperatur:

| Bsp. | Vibration der Kapillare | | | Fällbad | | Ausfallverhalten |
|---|---|---|---|---|---|---|
| | Einsatz | Frequenz [Hz] | Amplitude [dbV] | T [°C] | NMP Gehalt [Gew.%] | |
| 14 | Ja | 161 | 100 | 50 | 20 | Einzelne Perlen |
| 15 | Ja | 161 | 100 | 50 | 30 | Einzelne Perlen |
| 16 | Ja | 161 | 100 | 50 | 40 | Einzelne Perlen |
| 17 | Ja | 161 | 100 | 50 | 50 | Perlen, die im Fällbad agglomerieren |

Bei den Beispielen 18 bis 25 wurde die Lösung 4 eingesetzt. Die Temperatur der Polyarylether Lösung an der Kapillare betrug 70°C. Der Kapillarendurchmesser betrug 0,7mm. Die Fallhöhe wurde konstant bei 80 cm gehalten. Der Durchsatz wurde ebenso bei 3780 g/h konstant gehalten.
Die Fällbadtemperatur und Fällbadzusammensetzung wurden innerhalb eines Versuchs konstant gehalten. Versuche wurden bei unterschiedlichen Temperaturen und Zusammensetzung durchgeführt, wie in den unteren Tabellen angegebenen.
Der NMP-Gehalt im Fällbad wurde von 20 Gew.-% erhöht bis die im Fällbad vorliegenden Perlen agglomerierten. Agglomeration der Perlen ist unvorteilhaft, da solche Perlen nicht weiter verarbeitet werden können.
Variation des NMP-Gehaltes des Fällbades bei 35°C Fällbad Temperatur:

| Bsp. | Vibration der Kapillare | | | Fällbad | | Ausfallverhalten |
|---|---|---|---|---|---|---|
| | Einsatz | Frequenz [Hz] | Amplitude [dbV] | T [°C] | NMP Gehalt [Gew.%] | |
| 18 | Ja | 206 | 100 | 35 | 20 | Einzelne Perlen |
| 19 | Ja | 206 | 100 | 35 | 40 | Einzelne Perlen |
| 20 | Ja | 206 | 100 | 35 | 50 | Einzelne Perlen |
| 21 | Ja | 206 | 100 | 35 | 58 | Perlen, die im Fällbad agglomerieren |

Variation des NMP-Gehaltes des Fällbades bei 50°C Fällbad Temperatur:

| Bsp. | Vibration der Kapillare | | | Fällbad | | Ausfallverhalten |
|---|---|---|---|---|---|---|
| | Einsatz | Frequenz [Hz] | Amplitude [dbV] | T [°G] | NMP Gehalt [Gew.%] | |
| 22 | Ja | 161 | 100 | 50 | 20 | Einzelne Perlen |
| 23 | Ja | 161 | 100 | 50 | 30 | Einzelne Perlen |
| 24 | Ja | 161 | 100 | 50 | 40 | Einzelne Perlen |
| 25 | Ja | 161 | 100 | 50 | 50 | Perlen, die im Fällbad agglomerieren |

Die Beispiele 26 bis 31 zeigen den Einfluss der Konzentration an aprotischem Lösungsmittel im Fällbad auf die Bildung von Feinanteil Unter "Feinanteil" werden hierbei Polyarylenether-Perlen verstanden, die eine Partikelgröße von ≤ 1000 μm aufweisen.

Hierzu wurde eine Lösung 5 von Polyarlyenether in Sulfolan bzw. NMP hergestellt. Als Polyarylenether wurde Ultrason® E2020 der BASF SE eingesetzt. Die Konzentration des Polyarylenethers in Sulfolan betrug 16,0 Gew.-%, die Konzentration des Polyarylethers in NMP betrug 18,0 Gew.-%.

Der Polyarylenether wurde mittels Vertropfung gefällt und anschließend extrahiert.

Für die Vertropfung wurde die Lösung 5 in den Vorlagebehälter eingefüllt und auf die gewünschte Temperatur temperiert. Mittels Zahnradpumpe wurde die Lösung 5 über eine Kapillare vertropft. Die Fällung erfolgte in einem Fällbad mit Überlauf zu einem Schüttelsieb, das die Perlen abtrennte. Die Fällbadlösung wurde in einem Puffergefäß aufgefangen und anschließend wieder dem Fällbad zugeführt.

Die Konzentration von NMP bzw. Sulfolan im Fällbad wurde mittels Brechzahl überwacht und durch Zugabe von VE-Wasser ausgeglichen. Nach Ende der Vertropfung wurden die Perlen/Linsen abgesaugt, mit VE-Wasser gewaschen und anschließend extrahiert.

Die Bedingungen während der Vertropfung sind in der nachfolgenden Tabelle angegeben:

| Vers. | Lösungsmittel | Konz. in Lösung 5 [Gew.-%] | Konz. LM im Fällbad [%] | Temp. Fällbad [°C] | Temp. Lösung 5 beim Vertr. [°C] | Fallhöhe [cm] |
|---|---|---|---|---|---|---|
| 26 | NMP | 18,0 | 40 | 40 | 40 | 30 |
| 27 | NMP | 18,0 | < 1 | 40 | 40 | 30 |
| 28 | Sulfolan | 16,0 | < 1 | 40 | 80 | 60 |
| 29 | Sulfolan | 16,0 | 40 | 40 | 80 | 60 |

Die Bedingungen bei der Extraktion mit Wasser waren wie folgt:
Die extrahierten, feuchten Perlen/Linsen wurden im Trockenschrank bei 60 °C getrocknet und anschließend die Verteilung mittels Handsiebung im Siebturm ermittelt. Die Ergebnisse sind in der nachfolgenden Tabelle angegeben.

| Partikelgröße [μm] | 28 | 29 | 26 | 27 |
|---|---|---|---|---|
| 3150 | 99,16 | 100,0 | 100,0 | 99,80 |
| 2800 | 97,49 | 99,89 | 99,78 | 99,01 |
| 2500 | 92,48 | 99,21 | 98,49 | 97,43 |
| 2000 | 27,69 | 30,51 | 54,96 | 30,56 |
| 1600 | 8,88 | 2,94 | 8,62 | 5,84 |
| 1250 | 5,33 | 0,45 | 3,45 | 2,67 |
| 1000 | 4,28 | 0,23 | 1,08 | 1,68 |
| 650 | 3,87 | 0,45 | 0,22 | 0,69 |
| Summe ≤ 1000 **= Feinanteil** | 8,15 | 0,68 | 1,3 | 2,37 |

Die Beispiele 30 und 31 wurden analog zu den Beispielen 26 bis 29 durchgeführt. Geändert wurden die Fallhöhe und die Temperatur, die Konzentration des Fällbads wurde variiert. Die Ergebnisse sind in der nachfolgenden Tabelle angegeben.

| | Fällbad | | PES-Lsg. | | | |
|---|---|---|---|---|---|---|
| Vers. | Konz. NMP [%] | Temp. [°C] | FG [%] | Temp. [°C] | Fallhöhe [cm] | Feinanteil < 1 mm [%] |
| 30 | 20 | 35 | 23 | 65 | 90 | 0,37 |
| 31 | 1 | 35 | 23 | 65 | 90 | 0,93 |

Die Beispiele 26 bis 31 zeigen, dass im erfindungsgemäßen Konzentrationsbereich an aprotischem Lösungsmittel im Fällbad Polyarylenether-Perlen erhalten werde, die einen deutlich geringeren Feinanteil haben.

**Patentansprüche**

1. Verfahren zur Herstellung von Polyarylenether-Perlen aus einer Polyarylenetherlösung umfassend die Schritte

   i) Vereinzelung der Polyarylenetherlösung in einer Vereinzelungsvorrichtung, die in eine Schwingung mit einer Frequenz im Bereich von 10 bis 1400 Hz versetzt wird, unter Erhalt von Tropfen,
   ii) Überführen der Tropfen in ein Fällbad unter Ausbildung von Polyarylenether-Perlen in dem Fällbad, wobei das Fällbad

   (A) mindestens ein aprotisches Lösungsmittel (Komponente (1)) und mindestens ein protisches Lösungsmittel (Komponente (2)) enthält,
   (B) eine Temperatur von 0°C bis $T_c$ aufweist, wobei die kritische Temperatur $T_c$ in [°C] sich mit der Zahlenwertgleichung $T_c = (77- c) / 0,58$ bestimmen lässt, in der c die Konzentration der Komponente (1) im Fällbad in [Gew.-%] ist und
   (C) die Komponente (1) in Konzentrationen von 12 bis 70 Gew.-% aufweist, wobei

   die Gew.-% jeweils bezogen sind auf die Summe der Gew.-% der Komponente (1) und der Komponente (2) im Fällbad und wobei das Fällbad als Komponente (2) Wasser und/ oder Alkohol enthält, wobei die Polyarylenetherlösung eine Konzentration von 5 bis 50 Gew.-% Polyarylenether im aprotischen Lösungsmittel aufweist, wobei die Gew.-% bezogen sind auf die Summe der Gew.-% des Polyarylenethers und des aprotischen Lösungsmittels, wobei die Polyarylenetherlösung bei der Vereinzelung eine Tempertur vo 15 bis 250 °C aufweist, wobei das aprotische Lösungsmittel ausgewählt ist aus der Gruppe bestehend aus N-Methylpyrrolidon, N-Ethylpyrrolidon, Dimethylsulfoxid, Dimethylformamid, Sulfolan, Diphenylsulfon, 1,2-Dichlorbenzol, Hexamethylphosphorsäuretriamid und deren Mischungen.

2. Verfahren nach Anspruch 1, wobei das Fällbad bewegt ist.

3. Verfahren nach mindestens einem der Ansprüche 1 oder 2, wobei die Polyarylenetherlösung bei der Vereinzelung eine Temperatur von 20 bis 120 °C aufweist.

4. Verfahren nach mindestens einem der Ansprüche 1 bis 3, wobei die Polyarylenetherlösung nach Austritt aus der Vereinzelungsvorrichtung eine Fallstrecke von der Austrittsstelle bis zur Fällbadoberfläche von 0,10 m bis 1,20 m zurücklegt.

5. Verfahren nach mindestens einem der Ansprüche 1 bis 4, wobei als Vereinzelungsvorrichtung Kapillaren und/oder Lochplatten verwendet werden.

6. Verfahren nach Anspruch 5, wobei die Kapillaren und/oder das Loch einer Lochplatte einen Durchmesser von 0,1 bis 5,0 mm aufweisen.

7. Verfahren nach mindestens einem der Ansprüche 1 bis 6, wobei die Polyarylenetherlösung und das Fällbad das

gleiche aprotische Lösungsmittel enthalten.

**8.** Verfahren nach mindestens einem der Ansprüche 1 bis 7, wobei das Fällbad 12 bis 50 Gew.-% Komponente (1) enthält, wobei die Gew.-% jeweils bezogen sind auf die Summe der Gew.-% der Komponente (1) und der Komponente (2) im Fällbad.

**9.** Polyarylenether-Perlen aus dem Verfahren nach einem der Ansprüche 1 bis 8.

**10.** Verwendung der Polyarylenether-Perlen nach Anspruch 9 zur Herstellung von Polyarylenetherprodukten.

## Claims

**1.** A process for producing polyarylene ether beads from a polyarylene ether solution, comprising the steps of

i) dividing the polyarylene ether solution in a division apparatus which is made to vibrate with a frequency of 10 to 1400 Hz to obtain droplets,
ii) transferring the droplets into a precipitation bath to form polyarylene ether beads in the precipitation bath which

(A) comprises at least one aprotic solvent (component (1)) and at least one protic solvent (component (2)),
(B) has a temperature of 0°C to $T_c$, where the critical temperature $T_c$ in [°C] can be determined by the numerical equation $T_c = (77 - c) / 0.58$ in which c is the concentration of component (1) in the precipitation bath in [% by weight] and
(C) has component (1) in concentrations of 12 to 70% by weight, wherein

the percentages by weight are each based on the sum of the percentages by weight of component (1) and of component (2) in the precipitation bath and wherein the precipitation bath comprises water and/or alcohol as component (2), wherein the polyarylene ether solution has a concentration of 5 to 50% by weight of polyarylene ether in the aprotic solvent, where the percentages by weight are based on the sum of the percentages by weight of the polyarylene ether and the aprotic solvent, wherein the polyarylene ether solution on division has a temperature of 15 to 250°C, wherein the aprotic solvent is selected from the group consisting of N-methylpyrrolidone, N-ethylpyrrolidone, dimethyl sulfoxide, dimethylformamide, sulfolane, diphenyl sulfone, 1,2-dichlorobenzene, hexamethylphosphoramide and mixtures thereof.

**2.** The process according to claim 1, wherein the precipitation bath is agitated.

**3.** The process according to at least one of claims 1 or 2, wherein the polyarylene ether solution on division has a temperature of 20 to 120°C.

**4.** The process according to at least one of claims 1 to 3, wherein the polyarylene ether solution after leaving the division apparatus covers a full distance from the exit point to the precipitation bath surface of 0.10 m to 1.20 m.

**5.** The process according to at least one of claims 1 to 4, wherein the division apparatus used comprises capillaries and/or die plates.

**6.** The process according to claim 5, wherein the capillaries and/or the hole of a die plate has a diameter of 0.1 to 5.0 mm.

**7.** The process according to at least one of claims 1 to 6, wherein the polyarylene ether solution and the precipitation bath comprise the same aprotic solvent.

**8.** The process according to at least one of claims 1 to 7, wherein the precipitation bath comprises 12 to 50% by weight of component (1), where the percentages by weight are each based on the sum of the percentages by weight of component (1) and component (2) in the precipitation bath.

**9.** Polyarylene ether beads from the process according to any of claims 1 to 8.

**10.** The use of the polyarylene ether beads according to claim 9 for production of polyarylene ether products.

## Revendications

1. Procédé de fabrication de perles d'éther de polyarylène à partir d'une solution d'éther de polyarylène, comprenant les étapes suivantes :

   i) l'individualisation de la solution d'éther de polyarylène dans un dispositif d'individualisation qui est mis à osciller à une fréquence dans la plage allant de 10 à 1 400 Hz pour obtenir des gouttes,
   ii) le transfert des gouttes dans un bain de précipitation pour former des perles d'éther de polyarylène dans le bain de précipitation, le bain de précipitation

      (A) contenant au moins un solvant aprotique (composant (1)) et au moins un solvant protique (composant (2)),
      (B) présentant une température de 0 °C à $T_c$, la température critique $T_c$ en [°C] pouvant être déterminée avec l'équation de valeurs numériques $T_c = (77 - c) / 0,58$, dans laquelle c est la concentration du composant (1) dans le bain de précipitation en [% en poids], et
      (C) comprenant le composant (1) en des concentrations de 12 à 70 % en poids,

   les % en poids se rapportant à chaque fois à la somme des % en poids du composant (1) et du composant (2) dans le bain de précipitation, et le bain de précipitation contenant en tant que composant (2) de l'eau et/ou un alcool, la solution d'éther de polyarylène présentant une concentration de 5 à 50 % en poids en éther de polyarylène dans le solvant aprotique, les % en poids se rapportant à la somme des % en poids de l'éther de polyarylène et du solvant aprotique, la solution d'éther de polyarylène présentant lors de l'individualisation une température de 15 à 250 °C, le solvant aprotique étant choisi dans le groupe constitué par la N-méthylpyrrolidone, la N-éthylpyrrolidone, le diméthylsulfoxyde, le diméthylformamide, le sulfolane, la diphénylsulfone, le 1,2-dichlorobenzène, le triamide de l'acide hexaméthylphosphorique et leurs mélanges.

2. Procédé selon la revendication 1, dans lequel le bain de précipitation est agité.

3. Procédé selon au moins l'une quelconque des revendications 1 ou 2, dans lequel la solution d'éther de polyarylène présente lors de l'individualisation une température de 20 à 120 °C.

4. Procédé selon au moins l'une quelconque des revendications 1 à 3, dans lequel la solution d'éther de polyarylène parcourt après la sortie du dispositif d'individualisation une distance de chute depuis l'emplacement de sortie jusqu'à la surface du bain de précipitation de 0,10 m à 1,20 m.

5. Procédé selon au moins l'une quelconque des revendications 1 à 4, dans lequel des capillaires et/ou des plaques perforées sont utilisés en tant que dispositif d'individualisation.

6. Procédé selon la revendication 5, dans lequel les capillaires et/ou la perforation d'une plaque perforée présentent un diamètre de 0,1 à 5,0 mm.

7. Procédé selon au moins l'une quelconque des revendications 1 à 6, dans lequel la solution d'éther de polyarylène et le bain de précipitation contiennent le même solvant aprotique.

8. Procédé selon au moins l'une quelconque des revendications 1 à 7, dans lequel le bain de précipitation contient 12 à 50 % en poids du composant (1), les % en poids se rapportant à chaque fois à la somme des % en poids du composant (1) et du composant (2) dans le bain de précipitation.

9. Perles d'éther de polyarylène issues du procédé selon l'une quelconque des revendications 1 à 8.

10. Utilisation des perles d'éther de polyarylène selon la revendication 9 pour la fabrication de produits à base d'éther de polyarylène.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3644464
- EP 2305740 A
- EP 20189487 A
- EP 20287236 A
- WO 9415999 A
- US 3923738 A


### In der Beschreibung aufgeführte Nicht-Patentliteratur


- Encyclopedia of Polymer Science and Technology. **HERMAN F. MARK.** Polysulfones. 2003, vol. 4, 2-8
- Aromatic Polyethers. **HANS R. KRICHELDORF.** Handbook of Polymer Synthesis. 2005, 427-443